## Europäisches Patentamt

## European Patent Office

## Office européen des brevets

(11) Veröffentlichungsnummer: **0 110 199**
**B1**

(12) # EUROPÄISCHE PATENTSCHRIFT

(45) Veröffentlichungstag der Patentschrift:
23.08.89

(51) Int. Cl.⁴: **G 06 F 13/12**

(21) Anmeldenummer: 83111097.8

(22) Anmeldetag: 07.11.83

(54) Verfahren zum Steuern des Datentransfers zwischen einem Datensender und einem Datenempfänger über einen Bus mit Hilfe einer am Bus angeschlossenen Steuereinrichtung.

(30) Priorität: 09.11.82 DE 3241402

(43) Veröffentlichungstag der Anmeldung:
13.06.84 Patentblatt 84/24

(45) Bekanntmachung des Hinweises auf die Patenterteilung:
23.08.89 Patentblatt 89/34

(84) Benannte Vertragsstaaten:
AT DE FR GB IT

(56) Entgegenhaltungen:
US-A-3 411 143

ELECTRONIC DESIGN, Band 27, Nr. 7, 29. März 1979,
Seiten 102-106, Rochelle, US; D. STAMM et al.:
"Free the muC's CPU from I/O hassles with a
special I/O processor"
WESCON CONFERENCE RECORD, Band 25,
September 1981, Kapitel 5/12, Seiten 1-14, El
Segundo, California, US; G.R. MARTIN: "High-
performance peripherals complement NS16000
family"
ELEKTRONIKPRAXIS, Nr. 9, September 1982,
Seiten 131-134, Vogel Verlag, Nürzburg, DE; A.
BODE et al.: "7-Systementwurf mit Bitslice-
Mikroprozessoren"

(73) Patentinhaber: Siemens Aktiengesellschaft,
Wittelsbacherplatz 2, D-8000 München 2 (DE)

(72) Erfinder: Böning, Werner, Ing. grad.,
Washingtonstrasse 17, D-8000 München 19 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Steuern des Datentransfers zwischen einem Datensender und einem Datenempfänger über einen Bus mit Hilfe einer am Bus angeschlossenen Steuereinrichtung, die in Abhängigkeit eines Transferbefehle und Steuerbefehle enthaltenden in einem Speicher abgespeicherten Kanalprogramms den Datentransfer steuert.

In Mikrocomputersystemen ist es oft erforderlich, Daten zwischen einem Datensender, z. B. einem Speicher, und einem Datenempfänger, z. B. peripheren Geräten, zu übertragen. Die Steuerung dieses Datentransfers zwischen dem Speicher und den peripheren Geräten wird durch den Mikroprozessor gesteuert. Dazu sind der Mikroprozessor der Speicher und die peripheren Geräte an einen Bus angeschlossen, in dem ein Adreßbus, ein Datenbus und ein Steuerbus zusammengefaßt sind. Die Steuerung des Datentransfers zwischen dem Datensender und dem Datenempfänger erfolgt in Abhängigkeit eines Kanalprogramms, dem Transferbefehle und Steuerbefehle enthalten sind.

Um dem Mikroprozessor von den Datentransfers zu entlasten, ist es bekannt, an den Bus eine sog. DMA Peripheriesteuerung anzuschließen, die zum großen Teil selbstständig den Datentransfer zwischen dem Datensender und dem Datenempfänger steuert. Mikrocomputersysteme mit DMA Steuerung sind z .B. in "Elektronik Praxis," Nr. 9, Sept. 1982, S. 131 bis 134 und in "Electronic Design", Bd. 27, Nr. 7, Märtz 1979, S. 102 - 106 beschrieben.

Der Datentransfer wird, wie oben beschrieben, mit Hilfe von Kanalbefehlen gesteuert. Ein Kanalbefehl enthält das Kanalbefehlswort, welches die auszuführende Operation beschreibt, und verschiedene Parameter, wie z. B. die Anzahl der zu übertragenden Bytes, die Adresse des Datensenders und die Adresse des Datenempfängers. Mehrere solche Kanalbefehle können durch sog. Befehlskettung zu einem Kanalprogramm verbunden werden. Neben den Kanalbefehlen, die den eigentlichen Datentransfer steuern, gibt es noch Steuerbefehle, durch die organisatorische Aufgaben erfüllt werden. Eine solche organisatorische Aufgabe liegt dann vor, wenn nach der Abarbeitung eines Datentransfers der nächste Kanalbefehl nur dann bearbeitet werden soll, wenn eine vorher festgelegte Bedingung erfüllt ist. Ist diese Bedingung nicht erfüllt, muß entweder ein anderer Kanalbefehl als nächster Kanalbefehl ausgeführt werden, oder die Bearbeitung des Kanalprogramms beendet werden. Derartige bedingte Steuerbefehle sollen nun ebenfalls zur Entlastung des Mikroprozessors von der Steuereinrichtung selbstständig ausgeführt werden können.

Die der Erfindung zugrundeliegende Aufgabe besteht darin, ein Verfahren zum Steuern des Datentransfers zwischen einem Datensender und einem Datenempfänger über einen Bus mit Hilfe einer am Bus angeschlossenen Steuereinrichtung anzugeben, bei dem die Steuereinrichtung selbstständig derartige bedingte Steuerbefehle ausführen kann. Diese Aufgabe wird bei einem Verfahren der eingangs angegebenen Art dadurch gelöst, daß nach Abschluß der Bearbeitung eines Transferfehls in einem ersten Register eine die Abschlußursache kennzeichnende Registerstelle gesetzt wird, daß zur Ausführung eines bedingten Steuerbefehls nach Abarbeitung dieses Transferbefehls durch den bedingten Steuerbefehl in einem zweiten Register den Registerstellen des ersten Registers zugeordnete Registerstellen eingestellt werden, und daß die einander zugeordneten Registerstellen des ersten und zweiten Registers miteinander verglichen werden und in Abhängigkeit des Vergleichsergebnisses der bedingte Steuerbefehl ausgeführt wird oder der auf den Steuerbefehl folgende Befehl des Kanalprogramms ausgeführt wird.

Bei einem solchen Verfahren wird die Abschlußursache eines Transferbefehls, die sowieso in der Steuereinrichtung festgehalten wird, dazu benutzt, um bedingte Steuerbefehle auszuführen. Die Feststellung, ob ein bedingter Steuerbefehl ausgeführt wird oder nicht, übernimmt dabei die Steuereinrichtung.

Die Wirkungsweise der Steuereinrichtung kann noch erweitert werden, wenn die Inhalte der einander zugeordneten Registerstellen des ersten und zweiten Registers bei der Feststellung, ob eine Bedingung vorliegt oder nicht, zusätzlich noch invertiert der Vergleichseinrichtung zugeführt werden können.

Wenn eine Bedingung erfüllt ist, kann dies zu einer Verzweigung im Kanalprogramm führen, wobei die Adresse des nächsten auszuführenden Kanalbefehls aus einem Teil des bedingten Steuerbefehls entnommen werden kann, oder es kann die Bearbeitung des Kanalprogramms beendet werden (bedingter Stopbefehl).

Um die Möglichkeit zu schaffen, den Mikroprozessor von der Ausführung eines bedingten Steuerbefehls zu informieren, kann die Steuereinrichtung eine Unterbrechungsanforderung an den Mikrocomputer bei positivem Vergleichsergebnis abgeben.

Der Aufwand für die Steuereinrichtung ist dann besonders gering, wenn als erstes Register ein in der Steuereinrichtung enthaltenes Kanalzustandsregister verwendet wird und als zweites Register ein in der Steuereinrichtung enthaltenes Kanalbefehlsregister benutzt wird.

Besonders vorteilhaft ist es, wenn als Steuereinrichtung eine DMA Steuerung verwendet wird, die eine Sequencersteuerung und einen Mikroprogrammspeicher enthält, in dem den Kanalbefehlen zugeordnete Mikroprogramme gespeichert sind und wenn die Vergleichseinrichtung Teil eines Bedingungsmultiplexers der Sequencersteuerung ist, der mit dem Kanalzustandsregister und dem Kanalbefehlsregister verbunden ist.

Andere Weiterbildungen der Erfindung ergeben sich aus den Unteransprüchen.

Das erfindungsgemäße Verfahren ermöglicht es, daß die Steuereinrichtung selbsttätig, also ohne Benutzung des Mikroprozessors, z. B. folgende Schritte durchführen kann: Es kann ein Kanalbefehl automatisch wiederholt werden; es ist eine programmgesteuerte Unterbrechungsmeldung an den Mikroprozessor möglich, auch während des Ablaufs einer Ein/Ausgabeoperation. Letzteres dient dazu, den Mikroprozessor über den Fortgang eines Datentransfers aufmerksam zu machen, beispielsweise, wenn mit den ersten gelesenen Daten der Mikroprozessor bereits arbeiten möchte; eine Befehlseinleitung kann mit Ausgabe einer Gerätenummer des peripheren Gerätes unter Überprüfung des Gerätezustandes erfolgen, erst wenn die Überprüfung positiv ist, wird Befehl ausgeführt; der zu übertragende Datenblock kann auf bestimmte Byte oder Wort abgesucht werden und bei Nichtübereinstimmung z. B. die Datenübertragung beendet werden usw..

Anhand eines Ausführungsbeispiels, das in den Figuren dargestellt ist, wird die Erfindung weiter erläutert. Es zeigen

Fig. 1 ein Blockschaltbild eines Mikrocomputersystems,
Fig. 2 der Aufbau eines Steuerbefehls,
Fig. 3 eine erste Vergleichseinrichtung,
Fig. 4 eine zweite Vergleichseinrichtung,
Fig. 5 der Aufbau einer DMA Steuereinrichtung.

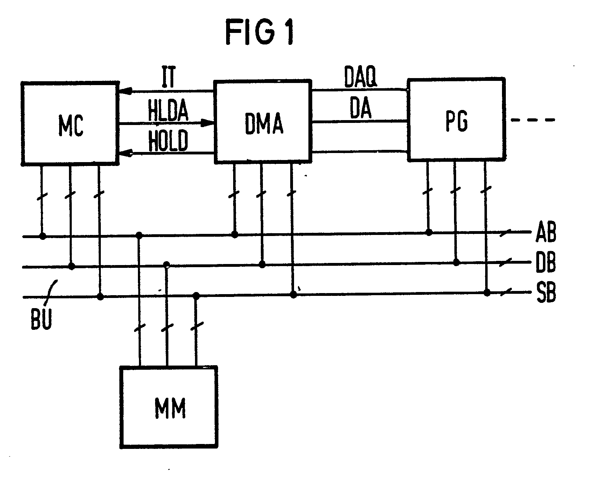

In Figur 1 ist ein Blockschaltbild eines Mikrocomputersystems gezeigt. An einem Bus BU, der einen Adreßbus AB, einen Datenbus DB und einen Steuerbus SB umfaßt, ist ein Mikroprozessor MC, ein Speicher MM, ein peripheres Gerät PG und eine DMA Steuerung DMA angeschlossen. Selbstverständlich können an ein derartiges Bussystem BU mehrere periphere Geräte PG, z. B. Datensichtgeräte, angeschlossen sein. Ein Mikroprozessor MC bekannten Aufbaus, z. B. IAPX 80286 von Intel, bearbeitet Programme, bei denen auch Datentransfers zwischen einem Datensender, z. B. dem Speicher MM und einem Datenempfänger, z. B. dem peripheren Gerät PG, notwendig sind. Wenn ein solcher Datentransfer durchgeführt werden soll, dann übergibt der Mikroprozessor MC der DMA Steuerung einen Kanal-Startbefehl. Das zur Ausführung des Startbefehls erforderliche Kanalprogramm kann z. B. im Speicher MM stehen und kann von dem Mikroprozessor MC mit den gewünschten Parametern versehen werden. Der Mikroprozessor MC teilt außerdem der Steuereinrichtung DMA mit, welche Adresse der erste Kanalbefehl im Speicher MM hat. Anschließend übernimmt die Steuereinrichtung DMA selbsttätig die Abarbeitung des Kanalprogramms, der Mikroprozessor MC kann sich dann anderen Aufgaben zuwenden. Damit hierbei Buszyklen der Steuereinheit DMA und des Mikroprozessors MP nicht kollidieren, muß die DMA-Steuerung seine Busbelegung vorher mit dem Signal HOLD beim MP anmelden und sich von diesem mit dem Signal HLDA den Bus zuteilen lassen.

Die Steuereinrichtung DMA holt den ersten Kanalbefehl aus dem Speicher MM und stellt fest, daß ein Datentransfer zwischen dem Speicher MM und dem peripheren Gerät PG durchgeführt werden soll. Nach dem Starten des Geräts und wenn das periphere Gerät PG zum Datentransfer bereit ist, gibt dieses eine Bedienungsanforderung (DA) an die Steuereinrichtung DMA ab und die Steuereinrichtung DMA quittiert die Anforderung mit DAQ und beginnt mit der Übertragung der Datenvom Speicher MM zum peripheren Gerät PG.

Die Transferbefehle im Kanalprogramm können auf verschiedene Weise beendet werden. Normalerweise ist ein Transferbefehl dann abgearbeitet, wenn alle Daten übertragen worden sind. Dazu ist die Anzahl der zu übertragenden Daten im Transferbefehl angegeben. Weitere Abschlußursache können dann gegeben sein, wenn ein zu übertragendes Byte oder Wort nicht mit einem vorgegebenen Wort oder Byte übereinstimmt oder wenn z. B. der Mikroprozessor MC eine Unterbrechung des Datentransfers wünscht. Diese den Abschluß des Datentransfers kennzeichnenden Ursachen können nun dazu verwendet werden, um durch die Steuereinrichtung DMA bedingte Steuerbefehle ausführen zu können. Dazu wird im Kanalprogramm ein bedingter Steuerbefehl hinter dem Transferbefehl, nach dem z. B. eine Verzweigung zu einem späteren Kanalbefehl durchgeführt werden soll, angeordnet. In diesem bedingten Steuerbefehl wird angegeben, bei welcher Abschlußursache des Datentransfers von der Steuereinrichtung DMA der bedingte Steuerbefehl ausgeführt werden soll oder nicht. Die Steuereinrichtung DMA vergleicht nämlich die im bedingten Steuerbefehl angegebenen Abschlußursachen mit den nach Beendigung des Datentransfers gegebenen Abschlußursachen und wenn das Vergleichsergebnis positiv ausfällt, führt sie den bedingten Steuerbefehl aus, wenn das Vergleichsergebnis negativ ist, überspringt sie den bedingten Steuerbefehl und führt den nach dem bedingten Steuerbefehl im Kanalprogramm angeordneten Kanalbefehl aus.

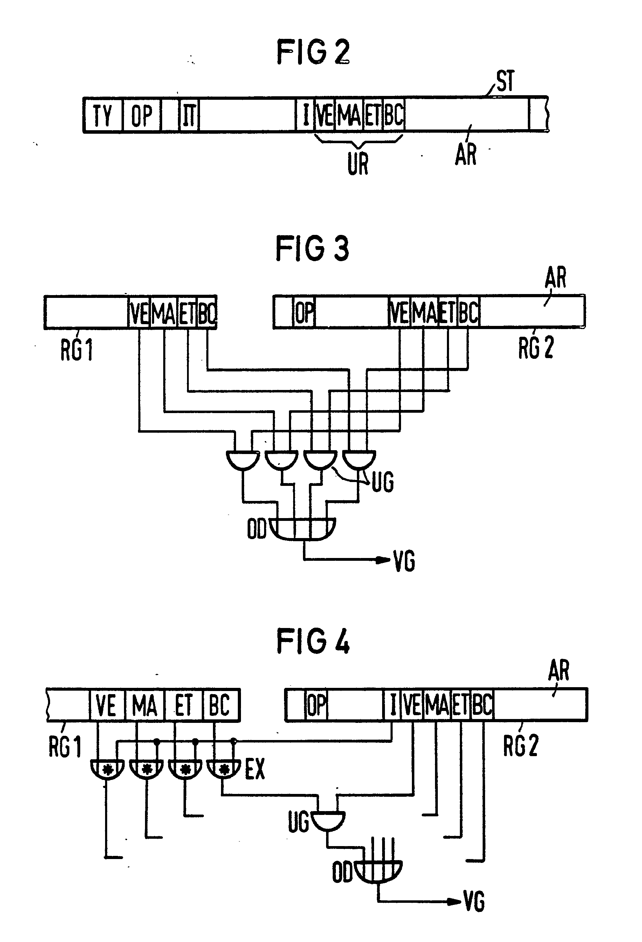

Eine Vergleichseinrichtung, mit der dies durchgeführt werden kann, ergibt sich aus Figur 3. Hier ist ein erstes Register RG1 gezeigt, in dessen Registerstellen die den Datentransfer beendenden Abschlußursachen angegeben sind. Diese Abschlußursachen sind in Figur 3 in den Registerstellen BC, ET, MA und VE angegeben. In einem Register RG2 wird der Steuerbefehl abgespeichert. Auch hier sind Registerstellen VE, MA, ET und BC vorhanden, die dann gesetzt werden, wenn bei Vorliegen der angegebenen Abschlußursache der im Register RG2 gespeicherte bedingte Steuerbefehl ausgeführt werden soll oder nicht. Der bedingte Steuerbefehl, der im Register RG2 abgespeichert ist, enthält neben den Abschlußursachen einen Operationscode OP, der angibt, ob bei Vorliegen der Bedingung eine Verzweigung zu einem anderen Kanalbefehl des Kanalprogramms durchgeführt werden soll oder ob die Bearbeitung des Kanalprogramms beendet werden soll. Durch eine Codierung im Bestandteil TY kann die Art des Befehls festgelegt werden, z. B. ob ein Steuerbefehl vorliegt oder ein Transferbefehl. Mit dem Teil AR des Steuerbefehls kann schließlich ein Teil oder die ganze Adresse des Kanalbefehls angegeben werden, unter der der nächste abzuarbeitende Kanalbefehl nach einer Verzweigung im Speicher MM steht.

Um festzustellen, ob der bedingte Steuerbefehl ausgeführt werden soll oder nicht, werden die einander zugeordneten Registerstellen VE, MA, ET und BC des Registers RG1 und des Registers RG2 miteinander verglichen, in Figur 3 mit Hilfe von UND Gliedern UG und bei positiven Vergleichsergebnis, wenn also eine der Abschlußursachen im Register RG1 auch im Register RG2 gesetzt ist, ein Signal VG abgegeben. Dazu werden die UND Glieder UG mit Hilfe eines ODER Gliedes OD zusammengefaßt.

Der Wirkungsbereich der Vergleichseinrichtung kann erweitert werden, wenn die Möglichkeit besteht, die Abschlußursachen UR aus Register RG1 invertiert oder nicht invertiert der Vergleichseinrichtung zuzuführen. Eine Vergleichseinrichtung die diese Aufgabe erfüllt, ist in Figur 4 gezeigt. Hier sind UND-Glieden UG Exklusiv ODER-Glieder EX vorgeschaltet, die einerseits mit den Registerstellen für die Abschlußursachen im Register RG1, andererseits mit einer Registerstelle I im Register RG2 verbunden sind. Ist die Registerstelle I logisch 0, dann werden die Abschlußursachen im Register RG1 nicht invertiert ausgewertet, ist dagegen I logisch 1, dann werden die Abschlußursachen im Register RG1 invertiert durch die Vergleichseinrichtung ausgewertet.

Schließlich kann es noch sinnvoll sein, bei Vorliegen eines positiven Vergleichsergebnisses VG eine Unterbrechungsanforderung IT an den Mikroprozessor MC zu geben. Wenn dies gewünscht ist, kann im Steuerbefehl ST (Figur 2) ein zusätzliches Bit IT gesetzt sein. Dieses gibt der Steuereinrichtung DMA an, ob bei Vorliegen eines positiven Vergleichsergebnisses VG eine Unterbrechungsanforderung IT an den Mikroprozessor MC gegeben werden soll oder nicht.

Aus Figur 2 ergibt sich noch einmal der Aufbau des Steuerbefehls ST und zwar der Teile, die zur Ausführung eines bedingten Steuerbefehls erforderlich sind. Die Bedeutung der einzelnen Teile dieses Steuerbefehls ST ist bereits oben erläutert worden.

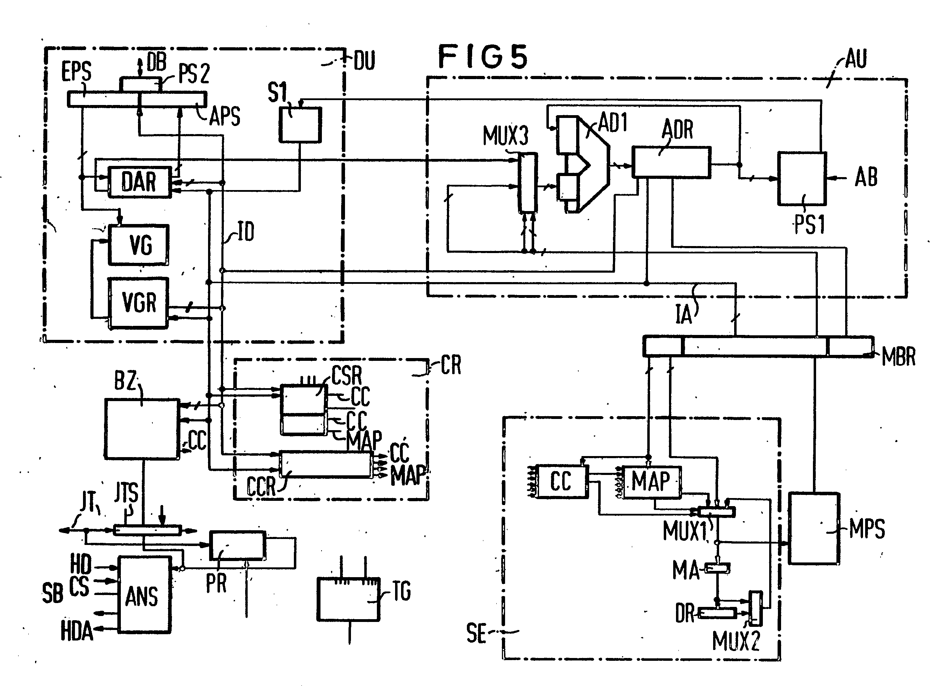

Wenn die Steuereinrichtung DMA als Sequencer gesteuerte DMA Steuerung aufgebaut ist, ist der Aufwand, der zur Ausführung der bedingten Steuerbefehle notwendig ist, besonders gering. Eine derartige Sequenser DMA Steuerung ergibt sich aus Figur 5.

Die Sequencersteuerung SE besteht in bekannter Weise aus einem Bedingungsmultiplexer CC, einem Befehlsdecoder MAP, einem ersten Multiplexer MUX1, einem Mikrobefehlsadreßregister MA, einem Adressenaddierer DR und einem zweiten Multiplexer MUX2. Eine solche Sequencersteuerung SE ist z. B. aus der oben angegebenen Literaturstelle bekannt. Die Sequencersteuerung SE ist mit einem Mikroprogrammspeicher MPS verbunden, in dem den Kanalbefehlen zugeordnete Mikroprogramme stehen. Die Sequencersteuerung SE adressiert somit in Abhängigkeit des Kanalbefehlswortes, das dem Befehlsdecoder MAP zugeführt wird, das dem Kanalbefehl zugeordnete Mikroprogramm. Die vom Mikroprogrammspeicher MPS abgegebenen Mikrobefehle werden in einem Mikrobefehlsregister MBR zwischengespeichert, von dort gelangt die im Mikrobefehl definierte Steuerinformation über einen internen Adreßbus und Steuerbus IA oder auch direkt zu den einzelnen Einheiten der DMA Steuerung.

Die DMA Steuerung enthält weiterhin eine Adresseneinheit AU, in der in einem Adressenregister ADR die Adresse des im Speicher MM abgespeicherten, auszuführenden Kanalbefehls enthalten ist. Die Kanalbefehlsadressen können in der Adresseneinheit AU modifiziert werden, und zwar mit Hilfe eines Addierers AD1, dem eine Adresse aus dem Adressenregister ADR und eine Größe über einen Multiplexer MUX3 zugeführt werden kann. Der Multiplexer MUX3 wird vom Mikrobefehl vom Mikrobefehlsregister MBR angesteuert, die zur Adresse zu addierende Größe kann ebenfalls aus dem Mikrobefehlsregister MBR stammen oder dem Multiplexer MUX3 gesondert zugeführt werden. Die Adresse zum Adreßbus AB wird vom Adressenregister ADR über einen Pufferspeicher PS1 ausgegeben.

Die DMA Steuerung weist weiterhin eine Dateneinheit DU auf, die insbesondere ein Datenregister DAR enthält. Die Dateneinheit DU ist mit dem Datenbus DB verbunden. Die vom Datenbus DB oder zum Datenbus DB zu übertragenden Daten werden in einem Pufferspeicher PS2 zwischengespeichert und gelangen dann entweder zu einem Eingangspufferspeicher EPS oder einem Ausgangspufferspeicher APS. Das Datenregister DAR ist sowohl mit dem Eingangspufferspeicher EPS als auch mit dem Ausgangspufferspeicher APS verbunden. Weiterhin liegt das Datenregister DAR an einem internen Datenbus ID und an dem internen Adreß- und Steuerbus IA. Zu der Dateneinheit DU gehören auch noch eine Vergleichseinrichtung VG und ein Vergleichsregister VGR. Die Adresse vom externen Adreßbus AB kann von der Adresseneinheit AU dem internen Adreßund Steuerbus IA über einen Schalter S1 zugeführt werden.

Die DMA Steuerung enthält weiterhin einen Kontrollregistersatz CR. Dieser Kontrollregistersatz CR enthält insbesondere ein Kanalstatusregister CSR, ein Kanalbefehlsregister CCR, und ein Befehlsregister GCR. Im Befehlsregister GCR ist z. B. der Startbefehl enthalten, der angibt, daß die Abarbeitung eines Kanalprogramms begonnen oder beendet werden soll und bei Vorliegen mehrerer Kanäle über welchen Kanal der Datentransfer erfolgen soll. Im Kanalbefehlsregister CCR steht dagegen der von der DMA Steuerung abzuarbeitende Kanalbefehl. Das Kanalstatusregister CSR gibt z. B. an, warum ein Datentransfer beendet worden ist.

Weitere Einheiten der DMA Steuerung nach Figur 5 ist ein Byte Zähler BZ, der die Anzahl der übertragenen Bytes zählt, eine Prioritätsschaltung PR, eine Schaltungsanordnung ITS zur Abgabe einer Unterbrechungsanforderung IT, ein. Taktgenerator TG und eine Anpassungsschlatung ANS, durch die die DMA Steuerung an den Mikroprozessor MC angepaßt wird. Der dabei herangezogene Mikroprozessor MC ist der obengenannte Mikroprozessor IAPX 80286 von Intel.

Bei einer derartigen DMA Steuerung kann als Register RG1 das Kanalstatusregister CSR des Kontrollregistersatzes CR verwendet werden, als Register RG2 das Kanalbefehlsregister CCR herangezogen werden. Die Vergleichseinrichtung der Figur 3 und der Figur 4 kann im Bedingungsmultiplexer CC der Sequencersteuerung SE enthalten sein, der einerseits mit dem Kanalstatusregister CSR, andererseits mit dem Kanalbefehlsregister CCR verbunden ist. Der im Kanalbefehlsregister CCR enthaltene Kanalbefehl liegt weiterhin an dem Befehlsdecoder MAP, der ebenfalls von dem Bedingungsmultiplexer CC angesteuert wird. In Abhängigkeit des Kanalbefehls im Kanalbefehlsregister CCR und dem Inhalt des Kanalstatusregisters CSR legt der Befehlsdecoder MAP eine verschiedene Adresse an den ersten Multiplexer MUX1 an.

Im folgenden soll kurz die Funktion der DMA Steuerung nach Figur 5 beschrieben werden, wobei nur die Einheiten näher erläutert werden, die zur Beschreibung der Erfindung notwendig sind. Dabei wird vorausgesetzt, daß die erforderlichen Kanalprogramme im Speicher MM stehen.

Zunächst lädt der Mikroprozessor MC das Befehlsregister GCR mit dem Startbefehl und speichert in das Adressenregister ADR die Adresse des ersten Kanalbefehls im Speicher MM. Dazu gibt der Mikroprozessor MC das Signal CS an die Steuerung und legt die entsprechenden Daten am Datenbus DB an. Die Daten (Befehl, Adresse) gelangen über den internen Datenbus ID entweder zum Adressenregister ADR oder zum Befehlsregister GCR. Hierbei adressiert der Mikroprozessor MC die betreffenden Register sowie Speicherzellen im MM. Das Befehlsregister GCR ist mit dem Befehlsdecoder MAP des Sequencers SE verbunden. Damit übernimmt die DMA Steuerung die weitere Ausführung des Kanalprogramms. Der Befehlsdecoder MAP erzeugt die Adresse des Mikroprogramms im Mikroprogrammspeicher MPS, das zur Befehlseinleitung erforderlich ist. Mit diesem Mikroprogramm wird veranlaßt, daß der erste Kanalbefehl, dessen Adresse im Adressenregister ADR gespeichert ist, und die über den Adreßbus AB ausgegeben wird, vom Speicher MM geholt wird. Dieser Kanalbefehl gelangt über den Datenbus DB, dem Puffer PS2 und EPS zum Datenregister DAR und außerdem über den internen Datenbus ID zum Kanalbefehlsregister CCR. Weiterhin wird ein Register im Bytezähler BZ mit der Anzahl der zu übertragenden Daten geladen. Schließlich lädt die DMA Steuerung noch in das Adressenregister ADR die Adresse des Datensenders und die Adresse des Datenempfängers. Damit sind in der DMA Steuerung der Kanalbefehl und die zugeordneten Parameter enthalten.

Die DMA Steuerung beginnt nun mit der Bearbeitung des ersten Kanalbefehls im Kanalbefehlsregister CCR. Das Kanalbefehlsregister CCR ist mit dem Befehlsdecoder MAP verbunden, der aus dem Kanalbefehl die Adresse des Mikroprogramms im Mikrobefehlsregister MPS entwickelt, das dem Kanalbefehl zugeordnet ist. Dieses wird angesteuert und wenn der erste Kanalbefehl ein Transferbefehl ist, die Datenübertragung durchgeführt. Dazu werden z. B. die einzelnen zu übertragenden Bytes über den Datenbus DB in das Datenregister DAR übertragen und von dort wieder über den Datenbus DB zum peripheren Gerät PG übertragen. Gleichzeitig vermindert der Byte Zähler BZ seinen Inhalt um eine Einheit. Dieser Vorgang wiederholt sich so lange, bis der Byte Zähler BZ den Wert 0 erreicht hat. Damit ist nämlich die Datenübertragung beendet, dies wird dem Bedingungsmultiplexer CC und dem Befehlsdecoder MAP mitgeteilt. Der Sequencer SE sorgt nun dafür, daß die Abschlußursache im Kanalstatusregister CSR abgespeichert wird und der nächste Kanalbefehl aus dem Speicher MM geholt wird. Die Adresse des nächsten Kanalbefehls im Adressenregister ADR war vorher mit Hilfe des Adressenaddierers AD1 neu berechnet worden. Dazu war zu der alten Adresse eine bestimmte Größe, die über den Multiplexer MUX3 dem Addierer zugeführt worden ist, hinzuaddiert worden. Diese neue Adresse wird über den Adreßbus AB ausgegeben und das zweite Kanalbefehlswort aus dem Speicher MM über den Datenbus DB in das Kanalbefehlsregister CCR eingespeichert.

Es sei angenommen, daß das zweite Kanalbefehlswort ein bedingter Steuerbefehl ist. Dieser bedingte Steuerbefehl hat den Aufbau gemäß Figur 2. Da sowohl das Kanalstatusregister CSR als auch das Kanalbefehlsregister CCR mit dem Bedingungsmultiplexer CC verbunden ist, kann dieser überprüfen, ob im Kanalstatusregister CSR eine der im Steuerbefehl enthaltenen Abschlußursachen vorhanden ist. Wenn dies der Fall ist, ist die Bedingung erfüllt und der Bedingungsmultiplexer CC veranlaßt den Befehlsdecoder MAP in Abhängigkeit des Operationscodes OP des Steuerbefehls das richtige Mikroprogramm im Mikroprogrammspeicher MPS anzusteuern. Gibt der Operationscode OP an, daß eine Verzweigung zu einem anderen Kanalbefehl durchgeführt werden soll, dann wird die Adresse des neuen Kanalbefehls in der Adresseneinheit AU berechnet. Die neue Adresse kann sich ergeben aus einem Teil des Steuerbefehls ST, der dem Adressenaddierer AD1 über den Multiplexer MUX3 zugeführt wird. Dieser Wert kann unverändert oder durch den Adressenaddierer AD1 modifiziert in das Adressenregister ADR übernommen werden. Die Adresse des neuen Kanalbefehls wird wiederum über den Adreßbus AB ausgegeben und der zugeordnete Kanalbefehl aus dem Speicher MM in das Befehlsregister CCR übertragen.

Stellt dagegen der Befehlsdecoder MAP fest, aus dem Operationscode des Steuerbefehls, daß bei Vorliegen der Bedingung die Bearbeitung des Kanalprogramms beendet werden soll, dann steuert der Sequencer SE das entsprechende Mikroprogramm im Mikroprogrammspeicher MPS an und veranlaßt die Beendigung der Bearbeitung des Kanalprogramms.

In Abhängigkeit des Steuerbefehls ST und zwar des Bits IT, kann die Schaltungsanordnung ITS veranlaßt werden, bei Vorliegen der Bedingung eine Unterbrechungsanforderung IT abzugeben.

Die Abschlußursache kann auch darin bestehen, daß der Inhalt des Datenregisters DAR mit dem Inhalt des Vergleichsregisters VGR in der Vergleichseinrichtung VG verglichen wird. Bei Ungleichheit kann ein Signal zum Kanalstatusregister CSR gegeben werden und die dort zugeordnete Stelle des Registers gesetzt werden. Der Bedingungsmultiplexer CC kann wiederum den Inhalt des Kanalbefehlsregisters CCR und den Inhalt des Kanalstatusregisters CSR vergleichen und bei positiven Vergleichsergebnis den Befehlsdecoder MAP veranlassen, daß dieser das richtige Mikroprogramm im Mikroprogrammspeicher MPS ansteuert.

Da sowohl die Prioritätsschaltung PR als auch die Anpassungsschaltung ANS zur Beschreibung des erfindungsgemäßen Verfahrens nicht erforderlich sind, ist auf diese nicht ausführlicher eingegangen worden. Zur Beschreibung des erfindungsgemäßen Verfahrens ist es nur erforderlich, bei der DMA Steuerung das Zusammenspiel des Kanalstatusregisters CSR, des Kanalbefehlsregisters CCR und des Sequencers SE näher zu beschreiben.

## Patentansprüche

1. Verfahren zum Steuern des Datentransfers zwischen einem Datensender und einem Datenempfänger über einen Bus mit Hilfe einer am Bus angeschlossenen Steuereinrichtung, die in Abhängigkeit eines Transferbefehle und Steuerbefehle enthaltenden, in einem Speicher abgespeicherten Kanalprogramms den Datentransfer steuert, dadurch gekennzeichnet, daß nach Abschluß oder Unterbrechung der Bearbeitung eines Transferbefehls die den Abschluß oder die Unterbrechung des Datentransfers kennzeichnende Ursache in entsprechenden Registerstellen (BC, ET, MA, VE) eines ersten Registers (RG1) gesetzt werden, daß zur Feststellung, ob ein dem Transferbefehl folgender, bedingter Steuerbefehl (ST) ausgeführt werden soll, in einem zweiten Register (RG2) aus dem bedingten Steuerbefehl (ST) die dem ersten Register (RG1) zugeordneten Registerstellen eingeschrieben werden, und daß die einander zugeordneten Registerstellen des ersten und zweiten Registers miteinander verglichen werden und bei positivem Vergleichsergebnis der bedingte Steuerbefehl ausgeführt wird bzw. bei negativem Vergleichsergebnis der auf den bedingten Steuerbefehl folgende Befehl des Kanalprogramms ausgeführt wird.

2. Verfahren nach Anspruch 1, dadurch gekennzeichnet, daß die Inhalte der die Abschlußursachen kennzeichnenden Registerstellen des ersten Registers (RG1) wahlweise invertiert oder nicht invertiert der Vergleichseinrichtung zugeführt werden.

3. Verfahren nach Anspruch 1 oder 2, dadurch gekennzeichnet, daß bei einer bedingten Verzweigung die Adresse des nächsten Kanalbefehls aus dem bedingten Steuerbefehl abgeleitet wird.

4. Verfahren nach Anspruch 1 oder 2, dadurch gekennzeichnet, daß bei positivem Vergleichsergebnis die Bearbeitung des Kanalprogramms beendet wird.

5. Verfahren nach einem der vorhergehenden Ansprüche, dadurch gekennzeichnet, daß die Steuereinrichtung eine Unterbrechungsanforderung (IT) bei entsprechendem Vergleichsergebnis abgibt.

6. Verfahren nach einem der vorhergehenden Ansprüche, dadurch gekennzeichnet, daß als erstes Register (RG1) ein in der Steuereinrichtung enthaltenes Kanalzustandsregister (CSR) verwendet wird, in dem nach Abschluß der Bearbeitung eines Transferbefehls die die Abschlußursache kennzeichnende Registerstelle gesetzt wird.

7. Verfahren nach einem der vorhergehenden Ansprüche, dadurch gekennzeichnet, daß als zweites Register (RG2) ein in der Steuereinrichtung enthaltenes Kanalbefehlsregister (CCR) verwendet wird, in dem der von der Steuereinrichtung zu bearbeitende Kanalbefehl eingespeichert wird.

8. Steuereinrichtung zur Durchführung des Verfahrens nach einem der vorhergehenden Ansprüche mit einer DMA-Steuerung und einem Mikroprogrammspeicher, dadurch gekennzeichnet, daß die DMA-Steuerung eine Sequencer-Steuerung (SE) und den Mikroprogrammspeicher (MPS) enthält, in dem den Kanalbefehlen zugeordnete Mikroprogramme gespeichert sind, und daß die Vergleichseinrichtung Teil eines Bedingungsmultiplexers (CC) der Sequencer-Steuerung (SE) ist, die mit dem Kanalzustandsregister (CSR) und dem Kanalbefehlsregister (CCR) verbunden ist.

9. Steuereinrichtung nach Anspruch 8, dadurch gekennzeichnet, daß die DMA Steuerung eine Adresseneinheit (AU) enthält, in der ein Adressenregister (ADR) für die Adresse des zu bearbeitenden Kanalbefehls im Speicher (MM) und ein Adressenrechner (AD1) vorgesehen ist, der bei einer Kanalprogramm-Verzweigung die Adresse des nächsten Kanalbefehls im Speicher mit Hilfe des Steuerbefehls (ST) berechnet.

## Claims

1. Method for controlling the data transfer between a data transmitter and a data receiver on a bus, using a control unit which is connected to the bus and which controls the data transfer in dependence on a channel program stored in a memory and containing transfer commands and control commands, characterized in that, after termination or interruption of the processing of a transfer command, the cause identifying the termination or the interruption of the data transfer is set in corresponding register positions (BC, ET, MA, VE) of a first register (RG1), that, in order to determine whether a conditional control command (ST) following the transfer command is to be executed, the register positions allocated to the first register (RG1) are written in from the conditional control command (ST) in a second register (RG2), and that the mutually associated register positions of the first and second register are compared with one another and the conditional control command is executed with a positive result of the comparison and the command of the channel program following the conditional control command is executed with a negative result of the comparison.

2. Method according to claim 1, characterized in that the contents of the register positions of the first register (RG1), which identify the causes of termination are supplied, optionally inverted or not inverted, to the comparison device.

3. Method according to claim 1 or 2, characterized in that, with a conditional branching, the address of the next channel command is derived from the conditional control command.

4. Method according to claim 1 or 2, characterized in that the processing of the channel program is ended with a positive result of the comparison.

5. Method according to one of the preceding claims, characterized in that the control unit outputs an interrupt request (IT) with an appropriate result of the comparison.

6. Method according to one of the preceding claims, characterized in that a channel status register (CSR) contained in the control unit is used as first register (RG1) in which the register position identifying the cause of termination is set after termination of the processing of a transfer command.

7. Method according to one of the preceding claims, characterized in that a channel command register (CCR) contained in the control unit is used as second register (RG2) in which the channel command to be processed by the control unit is stored.

8. Control unit for carrying out the method according to one of the preceding claims, comprising a DMA control and a microprogram store, characterized in that the DMA control contains a sequencer control (SE) and the microprogram store (MPS) in which microprograms associated with the channel commands are stored, and that the comparison device is a part of a condition multiplexer (CC) of the sequencer control (SE) which is connected to the channel status register (CSR) and the channel command register (CCR).

9. Control unit according to claim 8, characterized in that the DMA control contains an address unit (AU) in which there are provided an address register (ADR) for the address of the channel command in the memory (MM) to be processed and an address calculator (AD1) which calculates the address of the next channel command in the memory with the aid of the control command (ST) in the case of a channel program branching.

## Revendications

1. Procédé pour commander le transfert de données, par un bus, entre un émetteur de données et un récepteur de données, à l'aide d'un dispositif de commande raccordé au bus et qui commande le transfert de données en fonction d'un programme de canal stocké dans une mémoire et contenant des instructions de transfert et des instructions de commande, caractérisé en ce que, après la fin ou l'interruption du traitement d'une instruction de transfert, le motif caractérisant la fin ou l'interruption du transfert de données est indiqué dans des emplacements de registre (BC, ET, MA, VE) correspondants d'un premier registre (RG1), que pour déterminer si une instruction de commande conditionnelle (ST), faisant suite à l'instruction de transfert, doit être exécutée, les emplacements coordonnés du premier registre (RG1), extraits de l'instruction de commande conditionnelle (ST), sont inscrits dans un second registre (RG2), que les emplacements mutuellement coordonnés du premier et du second registre sont comparés entre eux en que l'instruction de commande conditionnelle est exécutée lorsque le résultat de la comparaison est positif et l'instruction du programme de canal faisant suite à l'instruction de commande conditionnelle est exécutée lorsque le résultat de la comparaison est négatif.

2. Procédé selon la revendication 1, caractérisé en ce que les contenus des emplacements de registre caractérisant les motifs de terminaison du premier registre (RG1) sont appliqués à l'état inversé ou non inversé, au choix, au dispositif de comparaison.

3. Procédé selon la revendication 1 ou 2, caractérisé en ce que, dans le cas d'une bifurcation conditionnelle, l'adresse de l'instruction de canal suivante est dérivée de l'instruction de commande conditionnelle.

4. Procédé selon la revendication 1 ou 2, caractérisé en ce que le traitement du programme de canal est terminé lorsque le résultat de la comparaison est positif.

5. Procédé selon une des revendications précédentes, caractérisé en ce que le dispositif de commande délivre une demande d'interruption (IT) lorsque le résultat de la comparaison est concordant.

6. Procédé selon une des revendications précédentes, caractérisé en ce que l'on utilise un registre d'état de canal (CSR) contenu dans le dispositif de commande en tant que premier registre (RG1), dans lequel, après la fin du traitement d'une instruction de transfert, est positionné l'emplacement de registre caractérisant le motif de la terminaison.

7. Procédé selon une des revendications précédentes, caractérisé en ce que l'on utilise un registre d'instructions de canal (CCR) contenu dans le dispositif de commande en tant que second registre (RG2), dans lequel est mémorisée l'instruction de canal à traiter par le dispositif de commande.

8. Dispositif de commande pour la mise en oeuvre du procédé selon une des revendications précédentes, comportant une commande (DMA) et une mémoire de microprogrammes, caractérisé en ce que la commande (DMA) contient une commande à séquenceur (SE) et la mémoire de microprogrammes (MPS), dans laquelle sont mémorisés les microprogrammes coordonnés aux instructions de canal, et que le dispositif de comparaison fait partie d'un multiplexeur de conditions (CC) de la commande à séquenceur (SE), laquelle est reliée au registre d'état de canal (CSR) et au registre d'instructions de canal (CCR).

9. Dispositif de commande selon la revendication 8, caractérisé en ce que la commande (DMA) contient une unité d'adresses (AU) dans laquelle sont prévus un registre d'adresses (ADR) pour l'adresse d'instruction de canal à traiter dans la mémoire (MM) et un calculateur d'adresses (AD1) qui, dans le cas d'une bifurcation du programme de canal, calcule l'adresse de l'instruction de canal suivante dans la mémoire à l'aide de l'instruction de commande (ST).

# FIG 1

# FIG 2

# FIG 3

# FIG 4

FIG 5

5